# EUROPEAN PATENT APPLICATION

(11) **EP 3 064 906 A1**
(43) Date of publication of application: **07.09.2016**
(21) Application number: 14857200.1
(22) Date of filing: 05.09.2014
(51) Int. Cl.: G01F 1/684

(54) **AIRFLOW MEASUREMENT DEVICE**

(30) Priority: 31.10.2013 JP 2013226132
(71) Applicant: Hitachi Automotive Systems, Ltd., Hitachinaka-shi, Ibaraki 312-8503 (JP)
(72) Inventor: YOGO Takayuki, Hitachinaka-shi Ibaraki 312-8503 (JP); HOSHIKA Hiroaki, Hitachinaka-shi Ibaraki 312-8503 (JP); MIKI Takahiro, Hitachinaka-shi Ibaraki 312-8503 (JP)
(74) Representative: MERH-IP Matias Erny Reichl Hoffmann Patentanwälte PartG mbB
(86) International application number: PCT/JP2014/073427
(87) International publication number: WO 2015/064213

(57) **Abstract**

In order provide a mass air flow measurement device capable of enhancing contamination resistance of a humidity sensing element and achieving highly accurate air flow sensing, the mass air flow measurement device includes an air flow sensing element 11 that senses air flow, a physical quantity sensing element 12 that senses at least one of humidity and pressure, and a circuit package 13 incorporating a circuit that processes an output signal of the air flow sensing element and an output signal of the physical quantity sensing element. The air flow sensing element and the physical quantity sensing element are arranged within the same circuit package.

## Description

### Technical Field

The present invention relates to a measurement device, particularly relates to a mass air flow measurement device that measures a physical quantity of air flow inside an internal combustion engine.

### Background Art

As a structure of an air flow physical quantity sensor that measures a physical quantity of air flow passing through an internal combustion engine, there is a technique described in PTL 1, for example. According to description of PTL 1, an air flow sensor element to measure mass air flow and an environment sensor element to measure any of pressure and humidity are provided, and a measurement room for housing the environment sensor element is arranged at a passage center side separate from a passage wall of a main air flow passage rather than a bypass passage in which the air flow sensor is arranged.

According to description of PTL 2, a semiconductor device includes at least a heating element formed on a semiconductor substrate and an air flow sensing section to sense flow of a fluid. This device has a configuration in which an air flow sensing section and a humidity sensing section to sense humidity of the fluid are arranged on a same surface side of a semiconductor such that the humidity sensing section comes upstream of the air flow sensing section, side by side in a flowing direction of the fluid.

### Citation List

### Patent Literatures

PTL 1: JP 2010-151795 A1
PTL 2: JP 2008-157742 A1

### Summary of Invention

### Technical Problem

An air flow sensing element, a humidity sensing element, and a pressure sensing element are arranged such that their sensing sections are exposed to the inside of the passage. Accordingly, when contaminant matters such as oil, carbon, and a waterdrop, included in intake air flow attach to the sensing section, sensing accuracy might be deteriorated. In particular, when a waterdrop attaches to the humidity sensing element, condensation might occur on the humidity sensing element and might affect sensing accuracy. To avoid this, it is desirable that the humidity sensing element is arranged at a position where a flow rate is low inside a main air flow passage. However, in order to enhance sensing accuracy in low air flow, it is desirable that the air flow sensing element is arranged near the center of a main air flow where an intake air flow rate is high. Therefore, there have been mutually exclusive conditions regarding conditions to be discussed in measuring these physical quantities, making it difficult to satisfy the mutually exclusive conditions.

An object of the present invention is to provide a mass air flow measurement device capable of achieving highly accurate air flow sensing while enhancing contamination resistance of the humidity sensing element.

### Solution to Problem

An exemplary solution to the above-described problem would be a mass air flow measurement device including an air flow sensing element that senses air flow, a physical quantity sensing element that senses at least one of humidity and pressure, and a circuit package incorporating a circuit that processes an output signal of the air flow sensing element or an output signal of the physical quantity sensing element, wherein the air flow sensing element and the physical quantity sensing element are arranged within the same circuit package.

### Advantageous Effects of Invention

According to the present invention, it is possible to provide a mass air flow measurement device capable of achieving highly accurate flow rate sensing while enhancing contamination resistance of the humidity sensing element.

### Brief Description of Drawings

[FIG. 1(A)] FIG. 1(A) is an external view of an example of the present invention.
[FIG. 1(B)] FIG. 1(B) is a sectional view of an example of the present invention.
[FIG. 2(A)] FIG. 2(A) is a circuit package external view of an example of the present invention.
[FIG. 2(B)] FIG. 2(B) is a circuit package external view of an example of the present invention.
[FIG. 3(A)] FIG. 3(A) is a circuit package external view of an example of the present invention.
[FIG. 3(B)] FIG. 3(B) is a circuit package external view of an example of the present invention.
[FIG. 4] FIG. 4 is a circuit package external view of an example of the present invention.
[FIG. 5] FIG. 5 is a circuit package external view of an example of the present invention.
[FIG. 6(A)] FIG. 6 (A) is a circuit package external view of an example of the present invention.
[FIG. 6(B)] FIG. 6(B) is a circuit package external view of an example of the present invention.
[FIG. 7] FIG. 7 is a circuit package external view of an example of the present invention.
[FIG. 8(A)] FIG. 8(A) is an external view and a sectional view of an example of the present invention.
[FIG. 8(B)] FIG. 8(B) is an external view and a sectional view of an example of the present invention.

### Description of Embodiments

Hereinafter, embodiments of the present invention will be described with reference to the drawings.

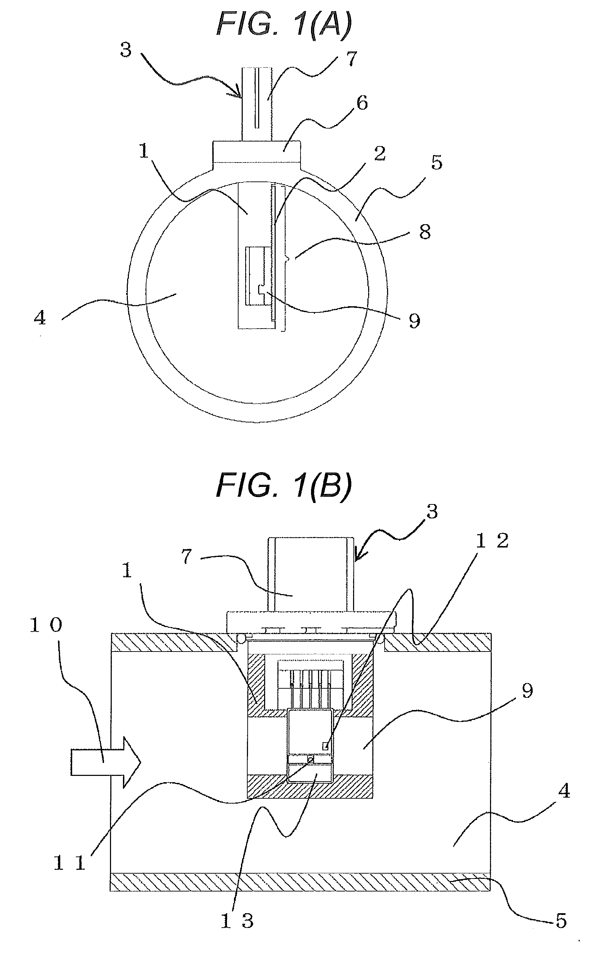

FIG. 1(A) is an external view of an example of the present invention. FIG. 1(B) is a sectional view of an example.

As illustrated in FIG. 1(A), a mass air flow measurement device 3 includes a housing structural component 1 and a cover 2. The housing structural component 1 is equipped with a flange 6 for fixing the mass air flow measurement device 3 to an air flow passage component 5 included in a main air flow passage 4, a connector 7 including a terminal for electrically connecting with an external device, and a measuring section 8 for measuring a physical quantity such as air flow. A bypass passage 9 is provided inside the measuring section 8. Furthermore, inside the measuring section 8, there are provided an air flow sensing element 11 to measure the flow of air flow 10 passing through the main air flow passage 4, a physical quantity sensing element 12 that senses at least one of humidity and pressure of the air flow, and a circuit package 13 that includes an electronic component such as a capacitor and is resin-sealed with epoxy resin. The circuit package 13 incorporates an integrated circuit (not illustrated) that processes an output signal from the air flow sensing element.

In order to avoid sensing accuracy deterioration due to thermal effects inside an engine room, the physical quantity sensing element 12 needs to be arranged within the passage and thus is exposed to the air flow together with the air flow sensing element 11, within the bypass passage 9.

It is desirable that there are no large irregularities that might disturb air flow around the air flow sensing element 11 in order to perform air flow sensing with high accuracy. To achieve this, the air flow sensing element 11 and the physical quantity sensing element 12 are arranged within the same circuit package 13. In addition, in resin-sealing of the physical quantity sensing element 12, a surface of the circuit package 13 is formed with a flat surface or with small irregularities necessary in manufacture. With this configuration, it is possible to eliminate or reduce influence of large irregularities, or the like, that might disturb the air flow, in a surrounding portions, and consequently, to enhance air flow sensing accuracy.

Furthermore, using arrangement within the same circuit package 13, a frame or substrate for mounting the air flow sensing element 11, the physical quantity sensing element 12, electronic components such as a capacitor can be configured with one component, making it possible to achieve downsizing and reduction of the number of components.

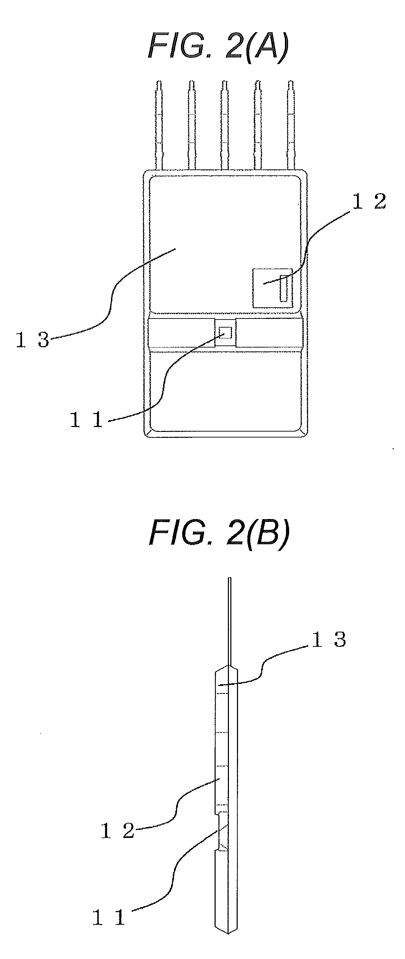

Next, a configuration of the circuit package 13 will be described in detail with reference to FIGS. 2(A) and 2(B).

In the circuit package 13, the air flow sensing element 11 is arranged as a bare chip of a semiconductor device, and the physical quantity sensing element 12 is provided as a plastic package component. Sensing sections of both sensing elements are exposed to the air flow.

At the time of resin molding, when stress is great when a mold hits the circuit package 13, the bare chip of the semiconductor device might suffer cracking, or the like. In particular, in a case where a plurality of sensing elements is arranged, the stress by which each of the sensing elements suffers cracking might differ depending on the size and form of the circuit package 13, leading to a problem of narrowing manufacturing management values at resin-sealed molding. To cope with this, by forming the physical quantity sensing element 12 as a plastic component, it is possible to reduce occurrence rate of cracking at resin molding of the circuit package 13, and thus to provide an inexpensive mass air flow measurement device.

Since air flow characteristics of the air flow sensing element 11 are influenced by a structure of the bypass passage, characteristic adjustment is typically performed in combination with the bypass passage. In comparison, output characteristics of the physical quantity sensing element 12 can be adjusted independently, and thus, advantageously, by arranging the physical quantity sensing element 12 within the circuit package 13 after independent adjustment, it is possible to enhance production efficiency.

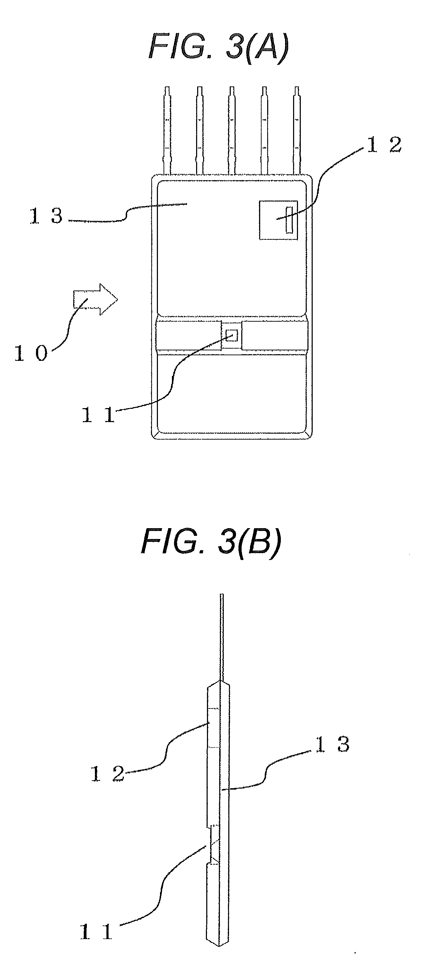

As illustrated in FIGS. 3(A) and 3(B), a mutual arrangement relationship between the air flow sensing element 11 and the physical quantity sensing element 12, within the circuit package 13 is such that the two elements are arranged to be perpendicular to a flowing direction of the air flow 10 passing through the main air flow passage. The air flow sensing element 11 is required to sense air flow from high flow to bottom flow. In particular, when a low air flow range is measured, since there is an issue of sensitivity of the air flow sensing element 11 toward the air flow, it is desirable to arrange the air flow sensing element 11 at a position where the flow rate is high. In contrast, on the physical quantity sensing element 12, the sensing section is required to be protected from contaminant matters such as dust and carbon contained in the intake air, and thus, it is desirable to arrange the physical quantity sensing element 12 at a position where the flow rate is low. By arranging the air flow sensing element 11 and the physical quantity sensing element 12 so as to be perpendicular to the flowing direction of the air flow 10, it is possible to provide a flow rate difference for each of the sensing elements. In other words, by arranging the air flow sensing element 11, and the physical quantity sensing element 12 that senses at least one of humidity and pressure, within the same circuit package, it is possible to arrange the air flow sensing element 11 at a position within a main air flow passage where the flow rate is high, and to arrange the physical quantity sensing element 12 at a position within the main air flow passage where the flow rate is low. By arranging the physical quantity sensing element 12 at a position within the main air flow passage, it is possible to reduce an influence of characteristic variation due to the heat inside the engine room. Also, by arranging the physical quantity sensing element 12 at a position where the flow rate is low, it is possible to reduce an influence of characteristic change due to contaminant materials including dust, oil, carbon, contained in the intake air, leading to enhancement of sensing accuracy and contamination resistance performance. In addition, by arranging the air flow sensing element 11 at a position where the flow rate is high, it is possible to perform sensing for ranges from low to high flow rates.

The physical quantity sensing element 12 arranged in the circuit package 13 is arranged on the side of a connector 7 rather than on the side of the air flow sensing element 11, when compared with the case in FIGS. 2(A) and 2(B). Since the connector 7 is arranged at a position close to a wall of the main air flow passage 4, where the flow rate is low. Accordingly, by arranging the physical quantity sensing element 12 on the side of the connector 7, it is possible to arrange' the air flow sensing element 11 at a position where the flow rate is high, and to arrange the physical quantity sensing element 12 at a position where the flow rate is low.

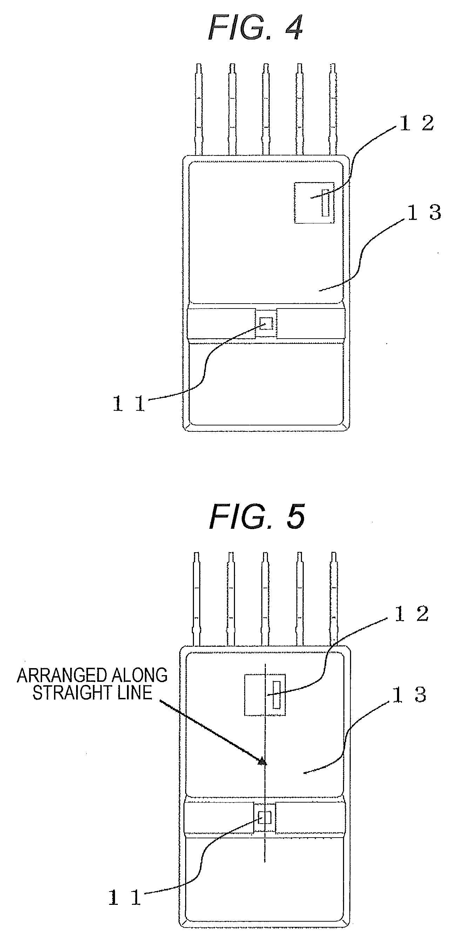

Next, another example of the present invention will be described with reference to FIG. 5. As illustrated in FIG. 5, unlike the above-described example, the present example has arranged the air flow sensing element 11 and the physical quantity sensing element 12, arranged in the circuit package 13, so as to be arranged along a straight line. As described above, since the sensing sections of the both sensing elements are exposed to the air flow, it is required to provide a plurality of openings when resin molding is performed. When resin molding is performed, a mold need to be pressed onto the opening, regardless of whether the opening is a fixed type or a movable type. For this process, an excessive pressing pressure might be applied onto the sensing element depending on how the mold is pressed, leading to occurrence of a damage on the sensing element. In a case where a plurality of openings exists, management of molding conditions such as pressing pressure would be more difficult. To cope with this, by arranging, as in the present example, the air flow sensing element 11 and the physical quantity sensing element 12 to be arranged along the straight line, it is possible to equalize pressing of the mold and to enhance moldability.

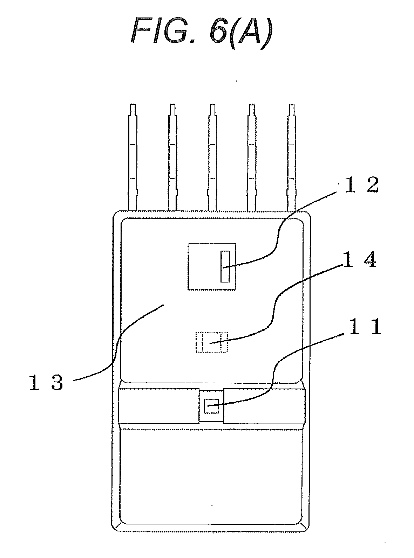

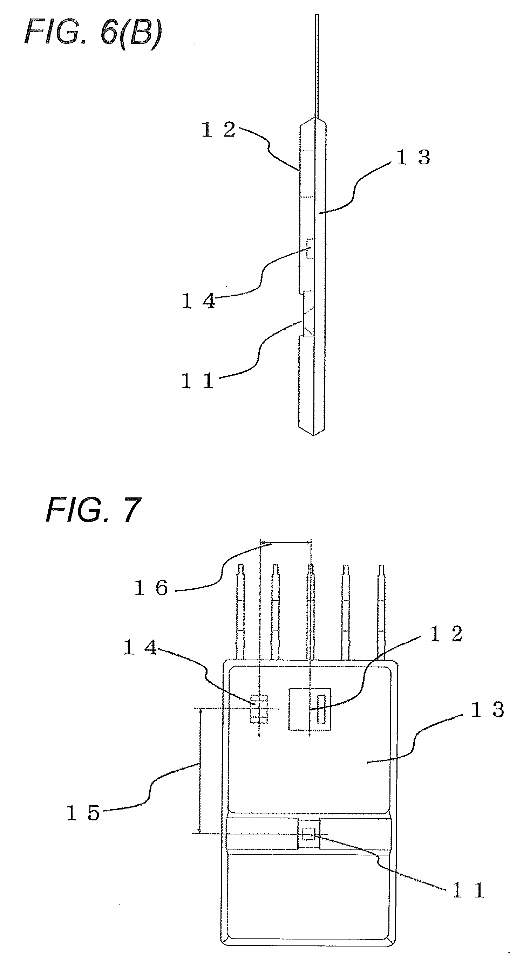

Next, still another example of the present invention will be described with reference to FIGS. 6(A) and 6(B).

In the circuit package 13, the air flow sensing element 11, the physical quantity sensing element 12, electronic components such as a capacitor, and a heating device 14 such as a chip resistor and a thermistor, as a heating component, are arranged. Particularly in a case where the physical quantity sensing element 12 is a humidity sensing element, a problem occurs such that when condensation occurs in a humidity sensing section, the humidity sensing element might continue to output a relative humidity value being close to 100% until the sensing section dries. Since condensation is more likely to occur when the temperature of the circuit package 13 is low, it is required to increase the temperature of the circuit package in order to prevent condensation. Accordingly, by arranging the heating device 14 within the circuit package 13, it is possible to prevent condensation and thus provide a highly accurate mass air flow measurement device.

As a method to prevent condensation, there is a method to heat only the humidity sensing section using the heating device 14. With this method, however, in a case where condensation occurs in the circuit package 13, even when the waterdrop is carried through the circuit package 13 to reach the humidity sensing section, the humidity sensing section continues to sense a state of relative humidity being substantially 100% until the section dries. Accordingly, sensing with higher accuracy would be possible when also the circuit package 13 itself is heated.

Next, another example of the present invention will be described with reference to FIG. 7.

In the present example, each of the elements are arranged within the circuit package 13 so as to achieve a distance 16 between the physical quantity sensing element 12 and the heating device 14 < a distance 15 between the air flow sensing element 11 and the heating device 14. Particularly in a case where the physical quantity sensing element 12 is a humidity sensing element, when condensation occurs in the humidity sensing element, the humidity sensing element continues to sense a state of relative humidity being substantially 100% until the element dries, as described above. Accordingly, it would be effective to heat portions in the vicinity of the humidity sensing element using the heating device 14 to increase the temperature of the circuit package. In this, however, when the heat generated by the heating device 14 is transmitted to the air flow sensing element 11, an air flow sensing error might be generated due to thermal effects. To cope with this, by arranging such that each of the elements are arranged within the circuit package 13 so as to achieve a distance 16 between the physical quantity sensing element 12 and the heating device 14 < a distance 16 between the air flow sensing element 11 and the heating device 14, that is, while maintaining the distance between the physical quantity sensing element 12 and the heating device 14, by separating the distance between the air flow sensing element 11 and the heating device 14, it would be possible to maintain sensing accuracy in physical quantities such as humidity, and at the same time, to reduce air flow sensing errors due to thermal effects, and thus, to provide a highly accurate mass air flow measurement device.

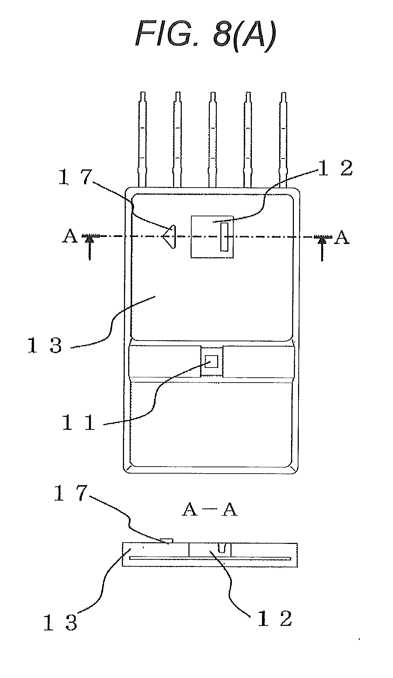

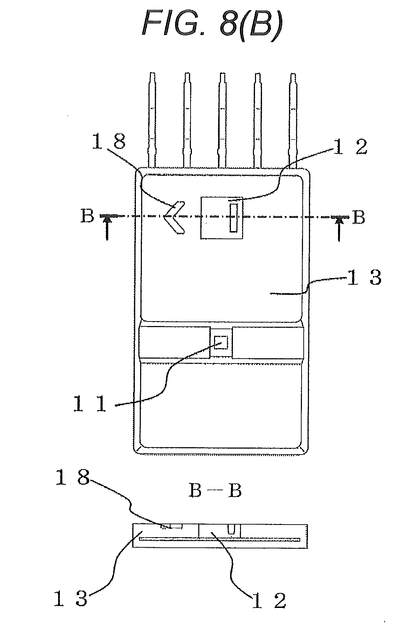

Next, another example of the present invention will be described with reference to FIGS. 8(A) and 8(B).

In the present example, a rib 17 or a groove 18 is formed on an upstream side of the physical quantity sensing element 11, in the air flow direction. Considering the intake air contains water, with this configuration having the rib 17 or the groove 18, it is possible to prevent contaminant materials such as dust, oil, and water contained in the intake air from attaching to the sensing section.

As above, embodiments of the present invention have been described. The present invention is not limited to the above-described embodiments but may include various design modifications without departing from the spirit of the present invention described in claims. For example, the above-described embodiments give detailed explanation just to allow the present invention to be clearly understood. Therefore, the present invention is not limited to the case having all of components in the configuration. In addition, a part of configuration of an embodiment can be replaced with a part of configuration of another embodiment. A part or the configuration of another embodiment can be added to a certain embodiment. Furthermore, regarding the portions of the configuration of each of the embodiments, addition, deletion, and replacement from another configuration would be possible.

### Reference Signs List

1 housing structural component
2 cover
3 mass air flow measurement device
4 main air flow passage
5 air flow passage component
6 flange
7 connector
8 measuring section
9 bypass passage
10 air flow
11 air flow sensing element
12 physical quantity sensing element
13 circuit package
14 heating device
15 distance between air flow sensing element and heating device
16 distance between physical quantity sensing element and heating device
17 rib
18 groove

## Claims

1. A mass air flow measurement device comprising:
an air flow sensing element that senses air flow;
a physical quantity sensing element that senses at least one of humidity and pressure; and
a circuit package incorporating a circuit that processes an output signal of the air flow sensing element or an output signal of the physical quantity sensing element,
wherein the air flow sensing element and the physical quantity sensing element are arranged in the same circuit package.

2. The mass air flow measurement device according to claim 1,
wherein at least one of the air flow sensing element and the physical quantity sensing element is formed of a plastic package component.

3. The mass air flow measurement device according to claim 1,
wherein the air flow sensing element and the physical quantity sensing element are arranged within the circuit package so as to be perpendicular to a flowing direction of the air passing through a main air flow passage.

4. The mass air flow measurement device according to claim 1,
wherein the physical quantity sensing element is arranged on a side of a connector rather than on a side of the air flow sensing element.

5. The mass air flow measurement device according to claim 1,
wherein the physical quantity sensing element is arranged along a same line.

6. The mass air flow measurement device according to claim 1,
wherein, in the circuit package, a heating device is arranged in the vicinity of the physical quantity sensing element.

7. The mass air flow measurement device according to claim 6,
wherein the heating device is formed with a chip resistor or a thermistor.

8. The mass air flow measurement device according to claim 6,
wherein, when a distance between the physical quantity sensing element and the heating device is defined as L1, and a distance between the air flow sensing element and the heating device is defined as L2, a relationship of L1 < L2 is satisfied.

9. The mass air flow measurement device according to claim 1,
wherein, in the circuit package, a rib or a groove is formed on at least one of upstream and downstream sides of the physical quantity sensing element, in the air flow direction.
